# EUROPEAN PATENT APPLICATION

(11) **EP 2 501 140 A1**
(43) Date of publication of application: **19.09.2012**
(21) Application number: 10829386.1
(22) Date of filing: 16.11.2010
(51) Int. Cl.: H04N 17/02

(54) **TEST MANAGING DEVICE AND METHOD FOR TESTING INTERACTIVITY ASPECTS FOR COMPLIANCE WITH THE BRAZILIAN DIGITAL TV STANDARD**

(30) Priority: 13.11.2009 BR PI0904431
(71) Applicant: TQTVD Software Ltda, 20011-000 Rio de Janeiro - RJ (BR)
(72) Inventor: CANOVA, Weber George, Barueri CEP: 06458-110 - SP (BR); DE BRITO, David Esteban, Itapu - Niterói CEP:24346 - 040 (BR)
(74) Representative: Pulieri, Gianluca Antonio
(86) International application number: PCT/BR2010/000370
(87) International publication number: WO 2011/057371

(57) **Abstract**

The present invention is related to the field of electronic engineering and computing. In particular, the present invention refers to a manager device for tests related to the Brazilian digital TV (DTV) standard in hardware adapted for DTV and a device for tests related to the Brazilian digital TV standard (ISDB-Tb standard) in its interactivity aspects.

## Description

### Field of the invention

The present invention is related to the field of electronic engineering and computing. In particular, the present invention refers to a manager device for tests related to the Brazilian digital TV (DTV) standard in hardware adapted for DTV and a device for tests related to the Brazilian digital TV standard (ISDB-Tb standard) in its interactivity aspects.

### Prior art

A digital TV receiver is a device capable of receiving and decoding the digital signals sent out by broadcasting stations for display on a monitor. Such an apparatus can be fixed (whether or not integrated in the TV set), portable or mobile. Some mediating methods or devices ("middlewares") are already being developed to be embedded in such receivers, making possible interactivity and being responsible for carrying out countless applications that will be sent out independently by the broadcasters and received by these receivers.

As the possibilities for interaction increase, along with the access speeds and the storage capability of the receivers, new opportunities are arising for the development of new models of these receivers.

In the proposed scenario, new scenarios and test fixtures can be developed to practice the proper functional capacity of these receivers in aspects of interactivity, so as to certify that they are totally compliant with the Brazilian digital TV standard as published in the documents of the Brazilian Digital TV System in ABNT (NBR 15606-2 and NBR 15606-4).

In the patent setting, some documents specify test methods or devices connected with digital TV. The references surrounding the invention, yet without anticipating it or even suggesting it, are listed below.

The test environment of MHP describes a method for managing tests of a receiver designed for the DVB standard, which is not compatible with the Brazilian digital TV standard. The present invention differs from this document in not being addressed to the management of tests of the digital DVB standard, but instead to aspects of interactivity of the ISDB-Tb standard, adopted by the Brazilian Digital TV System.

The document WO 2007/007056 refers to a monitoring unit of a multimedia device connected to a network, which is limited to reporting whether a problem is present in the device or in the transmission. The present invention differs from this document in being able to test the aspects of interactivity, off-line or online, in digital TV receivers in a simple to a thorough manner, in order to prevent devices with different degrees of incompatibility with the Brazilian Digital TV standard from being placed on the market.

The document US 2002/0073355 describes a method of proactive repair in DSL networks, primarily VDSL networks. The method of the present invention is in no way anticipated by the method of the cited document, since that method does not involve testing digital TV receivers.

The document US 2003/0120971 divulges a method for testing the performance of computerized equipment accessible via telecommunication networks. The method of the present invention is in no way anticipated by the method of the cited document, since that method involves tests on Internet pages, while the present method involves digital TV in aspects of interactivity.

As emerges from the literature search, no documents were found that anticipate or suggest the teachings of the present invention, so that the solution proposed here has novelty and inventive activity with respect to the prior art.

### Summary of the invention

The present invention specifies a test manager device and a method for carrying out automated tests, in aspects of interactivity, to be executed in the set of instructions of hardware adapted for DTV, to be embedded or used in the production of a digital TV receiver.

The present device provides a visual interface that allows the user to identify which test scenarios or test fixtures he wishes to test, in aspects of interactivity, in a particular digital TV receiver. It also allows the user to track the results of the tests, analyze the results obtained later on, create his own lists of test numbers or scenarios for each differing digital TV receiver, process or middleware, manage information reports on the test runs and the results identified during the tests.

In one aspect, therefore being one of the objects of the invention, a manager for automated tests in aspects of interactivity comprises: test manager, generator/transmitter, means of audio-video capture and means of emulating the commands of a remote control.

An additional object of the present invention is a testing device for aspects of interactivity related to the Brazilian digital TV standard.

A second object of the present invention is a device that additionally performs tests in aspects of interactivity in: audio-video streamings, broadcast programming information, DTV applications; data transmitted by the broadcasters, interactivity of the television viewer, and development of porting.

An additional object of the present invention is a manager of automated tests, in aspects of interactivity, comprising a visual interface, where the interface allows the user to:

a) check the quality (QA) of the set of instructions of the middleware, following in real time the execution of each test fixture/script, via an onscreen log;

b) execute his tests in a controlled and automated way;

c) select and sequence his tests;

d) configure his test environment;

e) capture the results (audio and video) presented by the DTV or receiver, for later evaluation;

f) record the entire execution and results of the tests;

g) manage executive and quantitative/informational reports on the test executions and problems identified during the tests;

h) analyze objectively the results by "pass/fail" criteria;

i) create his own test lists/plans;

j) execute any of the test scenarios or fixtures/scripts whenever he so desires; and

l) combinations of the above items.

In a second aspect, therefore being one of the objects of the present invention, is a test method in aspects of interactivity for devices related to the Brazilian digital TV standard, especially a test method for hardware adapted to the Brazilian digital TV standard in its aspects of interactivity.

One object of the present invention is a test method comprising the following steps:

I) Prepare the test scenario, in aspects of interactivity, related to the Brazilian digital TV standard;

II) Transmit the data for the test (s) to the hardware being tested;

III) Monitor the data transmission for the hardware being tested;

IV) Collect the results pertaining to the tests executed;

These and other objects of the invention will be appreciated at once by those versed in the art and shall be described in sufficient detail for their reproduction in the following description.

### Brief description of the figures

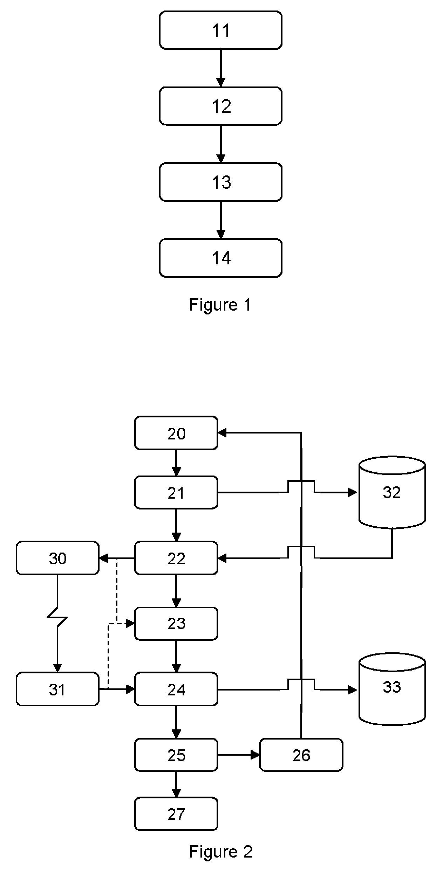

Figure 1 shows the flow chart of a schematic representation of the method of the present invention, where after the signaling of the start of the process there occurs: (11) preparation of the scenario of test(s) relating to the Brazilian digital TV standard; (12) transmission of the data for the test(s) to the device/hardware being tested; (13) monitoring of the execution of the test fixtures under the device/hardware being tested; (14) collection of results pertaining to the tests executed.

Figure 2 shows the flow chart of the schematic representation of the operation of the present device for tests related to the Brazilian digital TV standard, where (20) represents the start of a test; (21) the preparation of the test scenario(s); (22) the configuration of the data to be transmitted for the test(s) in the device/hardware to be tested; (23) the monitoring of the data transmitted/received; (24) the collection of results pertaining to the tests carried out; (25) conclusion of a test, which if it was not the last test there comes step 26, if it was the last test there comes step 27; (26) incrementing a counter and return to step 20; (27) represents the end of the test(s); (30) represents what will be transmitted to be executed in the device/hardware to be tested; (31) the receivers; (32) test repository; and (33) storage of the data from step 24.

### Detailed description of the invention

The examples presented here have the purpose of solely exemplifying one of the countless ways of realizing the invention, yet without limiting its scope.

The present invention provides a test environment to be used in sets adapted to digital TV (DTV), such as digital receivers that follow standards defined by the SBTVD Forum (Brazilian Digital TV System) in aspects of interactivity, and also provides a device making use of the aforesaid method.

The test manager device enables the execution of test scenarios and test fixtures to practice the proper functional capability of digital receivers in aspects of interactivity, so as to certify that they are totally adequate to the Brazilian digital TV standard published in the standards of the Brazilian digital TV System in ABNT (NBR 15606-2 and NBR 15606-4).

For purposes of the present invention, a device adapted to digital TV (DTV) is any one capable of transmitting and/or receiving digital signals by any available means (air, cable, Internet, telephone network) and interpret them in adequate manner. Examples of these devices include television sets, digital receivers, cellular telephones, etc.

### Test Manager Device

The present invention describes a testing device for the aspects of interactivity related to the Brazilian digital TV standard. Preferably, the devices adapted to DTV that are tested by the device on screen are digital TV receivers and/or television sets.

The present device comprises a digitally readable medium containing lines of program code and means of executing such lines of program code so as to implement an automated testing environment, comprising a visual interface. Said interface allows the user to:

a) check the quality (QA) of the set of instructions of the middleware, following in real time the execution of each test fixture, via the onscreen records (log);

b) execute his tests in a controlled and automated way;

c) select and sequence his tests;

d) configure his test environment;

e) capture the results (audio and video) presented by the DTV or receiver, for later evaluation;

f) record the entire execution and results of the tests;

g) manage executive and quantitative/informational reports on the test executions and problems identified during the tests;

h) analyze objectively the results by "pass/fail" criteria;

i) create his own test lists/plans;

j) execute any of the test scenarios or fixtures/scripts whenever he so desires; and

l) combinations of the above items.

In addition, the present manager device performs test(s) in the aspects of interactivity in: audio-video streamings, programming information of the broadcasters; applications for DTV; data transmitted by the broadcasters, interactivity of the television viewer and development of portability in DTV sets, hardware, or digital receivers available on the market.

The onscreen manager device has a unique and full set of test scenarios, covering the standards established by the documents ABNT NBR 15606-2 and 15606-4. To compose the test scenarios, a set of test cases is available for the device, covering the unit tests for Ginga-J, Ginga-NCL and DTV applications. The set of test cases can be updated periodically and made available for use.

The manager device of the present invention includes the following modules:

- Test manager: central system of the device, corresponding to the server responsible for execution and integration of the other modules with the device being tested;

- Generator/Transmitter: constitutes the playout manager, responsible for generating and transmitting audio and video TS (Transport Streams);

- Means of audio-video capture: for the tests in DTV, corresponding to any device capable of capturing and recording sound and image, such as a high-definition camera or a HDMI video disk which, together with the audio disk, capture the visual and sound results provided by the tests; and

- Means of emulating the commands of a remote control: device for the transmission of remote control commands, in the form of instructions sent by the test generator to the DTV-adapted device being tested.

The test manager also includes test scenarios or test fixtures that are selected from the group that includes the tests (lines of code, preferably in NCL, Lua or Java), images, sounds, videos, applications and combinations of these, adequate to each project.

Said device offers functionalities that can be used to guarantee the proper route of execution of the test code, to allow the tracking of the test flow and to implement structured exits that record the stages of execution of the test, and also offers a coding framework for tests that are consistent and reliable, thus defining the test result.

We shall now present the flow chart of schematic representation of the operation of the present manager device for automated tests.

### Test method

The method of the present invention, schematized in the form of a flow chart in Fig. 1, allows sets adapted to DTV to be tested and to check the quality of the system or devices making up these sets. Preferably, the sets adapted to DTV that are tested are digital TV receivers and/or television sets.

The testing method for sets related to the Brazilian digital TV standard in aspects of interactivity as presented in this invention comprises the following steps:

I) Prepare the test scenario, in aspects of interactivity, related to the Brazilian digital TV standard;

II) Transmit the data for the test (s) to the hardware being tested;

III) Monitor the data transmission for the hardware being tested;

IV) Collect the results pertaining to the tests executed;

Step I) allows the test or set of tests, within the desired test strategy, being carried out in the target set(s)/hardware, to be grouped in organized manner in order to be applied in the respective set(s)/hardware. In step II), the data pertaining to the test is transmitted to the target set/hardware. In step iii), the data transmission and the set/hardware being tested are monitored; and in iv) the results pertaining to the data transmitted and the data received from the target set/hardware are collected.

Preferably, the test scenarios or test fixtures/scripts are selected in step I) from the group comprised of test scripts (lines of code in NCL, Lua or Java), images, sounds, videos, applications and combinations of these.

It is also preferable that the adequate means of transmission in step II) is the signal of a playout, of the broadcasting station, and/or the return channel.

Figure 2 presents the flow chart of schematic representation of the operation of the present manager device for automated tests. The operation of the present device for tests related to the Brazilian digital TV standard in aspects of interactivity, incorporating the aforementioned method, preferably comprises the following steps:

a) signaling of the start of the test (s) (20);

b) preparation of the test scenario (21);

c) transmission of the test data to the DTV-adapted set being tested (22);

d) monitoring of the data transmitted/received by the DTV-adapted set (23);

e) collection of results pertaining to the tests carried out (24);

f) conclusion of a test, which if not the last test is followed by step (26), incrementing a counter and returning to step a), or if it is the last test is followed by step (27), ending the testing;

As an example of the implementation of the invention, we have the test manager "astroATE!", which performs the tests according to a defined method, enabling tracking of the test and its results in a continual manner. The method of operation is presented in Fig. 2. It starts by the preparation of the list of test scenarios to be executed in each test phase. After selecting the test cases, the test manager receives the respective test fixtures to be executed. For the execution, the test manager initiates a link with the generator/transmitter, in order to generate the necessary structure for each of the tests. The generator/transmitter prepares the data structure (DSM-CC Carrousel), including multimedia data for each selected test scenario, and then transmits it to the TV or receiver being tested. The generator/transmitter makes possible the sending of Java or NCL applications, defining parameters such as: PID, common-tag, DSM-CC version number etc. The generator/transmitter also associates services for each DSM-CC, generates AIT, PMT, and TS for each service related to each test scenario.

Once the application is received by the TV or receiver, a signal is sent to the test manager to start the test procedure. At the end of the procedure, the test manager sends a message to the generator/transmitter to interrupt and remove the application from the data flow, remaining on standby until the next test fixture by the test manager.

## Claims

1. Test manager device, **characterized in that** the tests are related to the Brazilian digital TV standard in its aspects of interactivity, comprising:
- a test manager;
- a generator/transmitter;
- means of audio-video capture; and
- means of emulating commands of a remote control.

2. Device according to claim 1, **characterized in that** it comprises a digitally readable medium containing lines of program code and means of executing such lines of program code so as to implement an automated testing environment, comprising a visual interface.

3. Device according to claim 1 or 2, **characterized in that** the manager has test scenarios in the aspects of interactivity, which include standards established by the documents ABNT NBR 15606-2 and 15606-4.

4. Device according to claim 1, 2, or 3, **characterized in that** it includes test scenarios that have sets of test cases.

5. Device according to claim 1, 2, or 4, **characterized in that** the test cases are selected from the group that includes test fixtures/scripts, images, sounds, videos, applications and combinations of these.

6. Device according to claim 1 or 2, **characterized in that** the generator/transmitter generates and transmits the audio and video signal.

7. Device according to claim 1 or 2, **characterized in that** the means of audio-video capture correspond to any device capable of capturing and recording sound and image.

8. Device according to claim 1, 2 or 7, **characterized in that** the means of audio-video capture are selected from among high-definition cameras, video disks, audio disks, and combinations of these.

9. Device according to claim 1 or 2, **characterized in that** the means of emulating the commands of the remote control are a device for transmission of commands.

10. Device according to claim 1 or 2, **characterized in that** the means of emulating the commands of the remote control are instructions sent by the test manager.

11. Device according to one of claims 1 to 10, **characterized in that** it comprises the steps of:
a) signaling of the start of the test(s) (20);
b) preparation of the test scenario (21);
c) transmission of the test data to the DTV-adapted set being tested (22);
d) monitoring of the data transmitted/received by the DTV-adapted set (23);
e) collection of results pertaining to the tests carried out (24);
f) conclusion of a test, which if not the last test is followed by step (26), incrementing a counter and returning to step a), or if it is the last test is followed by step (27), ending the testing;

12. Device according to one of claims 1 to 11, **characterized in that** it comprises a visual interface, where the interface allows the user to:
a) check the quality (QA) of the set of instructions of the middleware, following in real time the execution of each test fixture/script, via the onscreen log;
b) execute his tests in a controlled and automated way;
c) select and sequence his tests;
d) configure his test environment;
e) capture the results (audio and video) presented by the DTV or receiver, for later evaluation;
f) record the entire execution and results of the tests;
g) manage executive and quantitative/informational reports on the test executions and problems identified during the tests;
h) analyze objectively the results by "pass/fail" criteria;
i) create his own test lists/plans;
j) execute any of the test scenarios or fixtures/scripts whenever he so desires; and
l) combinations of the above items.

13. Method in accordance with claim 13, **characterized in that** the DTV-adapted set is chosen from among digital TV receivers and/or television sets.

14. Method of testing for DTV-adapted sets, **characterized in that** it is related to the Brazilian digital TV standard in its aspects of interactivity, involving the following steps
I) Prepare the test scenario, in aspects of interactivity, related to the Brazilian digital TV standard;
II) Transmit the data for the test(s) to the hardware being tested;
III) Monitor the data transmission for the hardware being tested;
IV) Collect the results pertaining to the tests executed;

15. Method in accordance with claim 14, **characterized in that** the DTV-adapted set is chosen from among digital TV receivers and/or television sets.

16. Method in accordance with claim 14, **characterized in that** the monitoring of the data is done by the means of audio/video capture.

17. Method in accordance with claim 14, **characterized in that** the data transmitted is data generated by the generator/transmitter and by the remote control emulator.
